# EUROPÄISCHE PATENTSCHRIFT

(11) **EP 2 714 485 B1**
(45) Veröffentlichungstag und Bekanntmachung des Hinweises auf die Patenterteilung: **30.09.2015**
(21) Anmeldenummer: 12706781.7
(22) Anmeldetag: 28.02.2012
(51) Int. Cl.: B60W 30/18, B60W 10/06, B60W 10/08, B60W 20/00, B60W 10/26, B60W 50/14, B60L 15/20

(54) **VERFAHREN ZUM BETRIEB EINES KRAFTFAHRZEUGS**
METHOD FOR OPERATING A MOTOR VEHICLE
PROCÉDÉ PERMETTANT DE FAIRE FONCTIONNER UN VÉHICULE AUTOMOBILE

(30) Priorität: 24.05.2011 DE 102011102423
(43) Veröffentlichungstag der Anmeldung: 09.04.2014
(73) Patentinhaber: Audi AG, 85045 Ingolstadt (DE)
(72) Erfinder: MEITINGER, Karl-Heinz, 81667 München (DE); ULLMANN, Stefan, 80797 München (DE)
(74) Vertreter: Herbst, Matthias Heinz
(86) Internationale Anmeldenummer: PCT/EP2012/000851
(87) Internationale Veröffentlichungsnummer: WO 2012/159686

(56) Entgegenhaltungen:
- EP-A2- 2 110 289
- US-A1- 2009 108 803
- US-B1- 6 868 318

## Beschreibung

Die Erfindung betrifft ein Verfahren nach dem Oberbegriff des Anspruchs 1 zum Betrieb eines Kraftfahrzeugs, umfassend wenigstens einen mit wenigstens einer wiederaufladbaren, elektrische Energie speichernden Energiespeichereinheit verbundenen Elektromotor, wobei der Ladebetrieb der Energiespeichereinheit derart erfolgt, dass eine unterhalb des maximalen Ladezustands der Energiespeichereinheit liegende Ladezustandsgrenze nicht überschritten wird.

Alternative Antriebsformen moderner Kraftfahrzeuge, welche zusätzlich zu einem konventionellen Verbrennungsmotor wenigstens einen Elektromotor als Teil des Antriebsaggregats oder ausschließlich wenigstens einen Elektromotor als Antriebsaggregat aufweisen, sind weithin bekannt. Erstere werden häufig als sogenannte Hybridkraftfahrzeuge, letztere als reine Elektrokraftfahrzeuge bezeichnet. Die für den Betrieb des jeweiligen Elektromotors erforderliche Energiemenge wird dabei üblicherweise von wenigstens einer mit dem oder den Elektromotor(en) verbundenen wiederaufladbaren Energiespeichereinheit bereitgestellt.

Es ist hierbei bekannt, den Ladebetrieb entsprechender wiederaufladbarer Energiespeichereinheiten derart zu steuern, dass eine unterhalb des maximalen Ladezustands der Energiespeichereinheit liegende Ladezustandsgrenze nicht überschritten wird. Mithin kann der Ladebetrieb entsprechender wiederaufladbarer Energiespeichereinheiten beispielsweise auf einen Ladezustand von 80 % der maximalen Ladekapazität der jeweiligen Energiespeichereinheit begrenzt sein. Hierdurch kann die Lebensdauer der jeweiligen Energiespeichereinheiten erhöht werden.

Es sind weiterhin üblicherweise unter dem Begriff "Launch Control" bekannte kraftfahrzeugseitig vorgesehene Fahrzeuganfahrsysteme, welche zur automatischen Durchführung einer maximalen Beschleunigung des, insbesondere mit einem Automatikgetriebe ausgestatteten, Kraftfahrzeugs aus dem Stand ausgebildet sind, bekannt. Bei Aktivieren eines entsprechenden Fahrzeuganfahrsystems erfolgt eine über eine oder mehrere Steuereinrichtung(en) gesteuerte automatische maximale Beschleunigung des Kraftfahrzeugs aus dem Stand bis zum Erreichen einer vorgegebenen oder vorgebbaren Zielgröße, wie etwa einer Zielgeschwindigkeit. Entsprechend kann das Kraftfahrzeug aus dem Stand beispielsweise mit einer maximalen Beschleunigung von 0 auf 100 km/h beschleunigt werden. Die Aktivierung entsprechender Fahrzeuganfahrsysteme bedingt eine Änderung verschiedener Parameter des Kraftfahrzeugs, wie z. B. der Getriebesteuerung oder einer Antischlupfregelung (ASR).

EP 2 110 289 A2 offenbart ein Verfahren mit den Merkmalen des Oberbegriffs des Anspruchs 1.

Um ein automatisiertes maximal beschleunigtes Anfahren eines mit wenigstens einem Teil des Antriebsaggregats oder das Antriebsaggregat selbst bildenden Elektromotor ausgestatteten Kraftfahrzeugs durchzuführen, sind die entsprechenden Fahrzeuganfahrsysteme heutzutage nicht an das Potential entsprechender Hybridkraftfahrzeuge bzw. reiner Elektrokraftfahrzeuge angepasst.

Der Erfindung liegt sonach das Problem zugrunde, ein Betriebsverfahren für ein Kraftfahrzeug mit wenigstens einem mit wenigstens einer wiederaufladbaren, elektrische Energie speichernden Energiespeichereinheit verbundenen Elektromotor anzugeben, welches im Hinblick auf eine Durchführung einer entsprechenden automatisierten maximal beschleunigten Anfahrt aus dem Stand verbessert ist.

Das Problem wird erfindungsgemäß durch ein Verfahren mit den Merkmalen des Anspruchs 1 gelöst.

Der vorliegenden Erfindung liegt die Idee zugrunde, das Potential der wenigstens einen, dem wenigstens einen kraftfahrzeugseitig vorgesehenen Elektromotor zugeordneten Energiespeichereinheit, insbesondere im Rahmen eines / aktivierten Fahrzeuganfahrsystems, auszunutzen.

Hierfür wird in einer ersten Ausgestaltung des erfindungsgemäßen Verfahrens bei Aktivieren des Fahrzeuganfahrsystems, welches zur automatischen Durchführung einer maximalen Beschleunigung des Kraftfahrzeugs aus dem Stand ausgebildet ist, der Ladebetrieb der Energiespeichereinheit vor der Beschleunigung des Kraftfahrzeugs derart gesteuert, dass die Energiespeichereinheit bis zu einer weiteren, oberhalb der ersten Ladezustandsgrenze liegenden Ladezustandsgrenze geladen wird. Hierbei kann der übliche Ladezustand der Energiespeichereinheit kurzzeitig beispielsweise von 80 % des maximalen Ladezustands auf beispielsweise 90 % des maximalen Ladezustands erhöht werden. Selbstverständlich ist es denkbar, als weitere Ladezustandsgrenze den maximalen Ladezustand der Energiespeichereinheit zu verwenden. Grundsätzlich können die erste und/oder weitere Ladezustandsgrenze etwa werksseitig fest vorgegeben oder etwa von einem Benutzer individuell vorgebbare Ladezustandsgrenzen sein.

Die Erhöhung des Ladezustands insbesondere über eine Ladezustandsgrenze von ca. 80 % des maximalen Ladezustands, bewirkt bei einer Vielzahl von Energiespeichereinheiten eine deutliche Spannungszunahme, was gleichermaßen eine Leistungserhöhung, das heißt insbesondere bezüglich der Leistung, die dem zur automatischen Beschleunigung des Kraftfahrzeugs zur Verfügung gestellt wird, bedeutet. Die konkrete Einstellung entsprechender Ladezustandsgrenzen kann mit einer Vielzahl an energiespeichereinheitspezifischen Parametern zusammenhängen, wobei beispielsweise auch betriebssicherheitstechnische Aspekte berücksichtigt werden.

Die vorstehend genannte übliche Ladezustandsgrenze von ca. 80 % ist lediglich beispielhaft zu verstehen. Grundsätzlich ist die übliche Ladezustandsgrenze energiespeicherspezifisch bzw. individuell festgelegt, d. h. diese variiert in der Regel bei unterschiedlichen Energiespeichereinheiten und kann demnach bei bestimmten Energiespeichereinheiten beispielsweise auch bei ca. 75 % oder 85 % des maximalen Ladezustands liegen. Entsprechend ist grundsätzlich auch die weitere Ladezustandsgrenze in Abhängigkeit des konkreten Aufbaus der Energiespeichereinheit individuell festzulegen.

Entsprechend wird im Rahmen dieser Ausgestaltung des erfindungsgemäßen Verfahrens der Ladezustand der wenigstens einen Energiespeichereinheit nach Aktivieren des Fahrzeuganfahrsystems, das heißt unmittelbar vor Beginn der automatisierten Anfahrt bzw. bei noch stehendem Kraftfahrzeug, auf die weitere Ladezustandsgrenze erhöht.

Das Kraftfahrzeug wird bei Aktivieren des Fahrzeuganfahrsystems somit derart konditioniert, dass diesem bereits vor dem eigentlichen Beschleunigungsvorgang mehr Leistung als üblich, das heißt im Betrieb mit nicht aktiviertem Fahrzeuganfahrsystem, zur Verfügung steht. Entsprechend kann das Kraftfahrzeug im Rahmen der dann durchgeführten automatischen Maximalbeschleunigungaus dem Stand mit mehr Leistung beschleunigt werden.

Der tatsächliche Beschleunigungsvorgang kann im Weiteren beispielsweise unmittelbar bei Erreichen der weiteren Ladezustandsgrenze, sofern der Fahrer eine entsprechende Anfahrt- bzw. Beschleunigungsfreigabe erteilt hat, und/oder durch eine Benutzerabfrage nach Erreichen der weiteren Ladezustandsgrenze initiiert werden. Als Anfahrt- bzw. Beschleunigungsfreigabe kann beispielsweise eine kurzzeitige Betätigung des Gaspedals, eines weiteren Bedienelements oder eine Spracheingabe verwendet werden. Bevorzugt wird das Erreichen der weiteren Ladezustandsgrenze über ein Ausgabemittel ausgegeben und dem Fahrer derart kenntlich gemacht. Hierunter ist etwa eine entsprechende optische Anzeige oder ein Ertönen eines akustischen Signals zu verstehen.

Unter einer Ladezustandsgrenze sind selbstverständlich auch bestimmte, insbesondere geschlossene, Ladezustandsintervalle zu verstehen.

Eine weitere Ausgestaltung des erfindungsgemäßen Verfahrens sieht vor, dass bei Aktivieren des Fahrzeuganfahrsystems anstelle der Erhöhung des Ladezustands der Energiespeichereinheiten auf die weitere Ladezustandsgrenze wenigstens eine weitere wiederaufladbare Energiespeichereinheit in Serie zugeschaltet wird.

Diese Ausgestaltung erreicht die Konditionierung des Kraftfahrzeugs, das heißt die Bereitstellung zusätzlicher Leistung für die von dem durch das Fahrzeuganfahrsystem durchzuführenden automatischen maximal beschleunigten Anfahrt aus dem Stand, durch das Zuschalten wenigstens einer weiteren, gegebenenfalls als Stützbatterie oder dergleichen zu bezeichnenden, in Serie geschalteten Energiespeichereinheit. Die Serienschaltung mehrerer entsprechender Energiespeichereinheiten bewirkt eine Spannüngserhöhung und somit eine Leistungszunahme. Selbstverständlich sind die über ein entsprechendes Schaltmittel oder dergleichen in Serie schaltbaren Energiespeichereinheiten bezüglich ihres Aufbaus respektive Ladezustands im Hinblick auf eine Leistungszunahme der Energiespeichereinheiten und somit auch des mit diesen verbundenen Elektromotors ausgewählt.

In dieser erfindungsgemäßen Ausgestaltung kann der tatsächliche Beschleunigungsvorgang gegebenenfalls ohne Wartezeit unmittelbar bei Aktivieren des Fahrzeugsystems erfolgen, da hier lediglich die wenigstens eine weitere Energiespeichereinheit in Serie zuzuschalten ist. Es ist hier nicht erforderlich, auf das Erreichen der weiteren Ladezustandsgrenze der Energiespeichereinheit zu warten. Gegebenenfalls kann der tatsächliche Beschleunigungsvorgang selbstverständlich auch hier durch eine entsprechende Benutzerabfrage bzw. Benutzereingabe initiiert werden.

Es ist gleichermaßen denkbar, die beschriebenen Ausgestaltungen des erfindungsgemäßen Verfahrens zu kombinieren, das heißt bei Aktivieren des Fahrzeuganfahrsystems den Ladebetrieb der Energiespeichereinheit vor der Beschleunigung des Kraftfahrzeugs auf die weitere Ladezustandsgrenze erfolgen zu lassen als auch wenigstens eine weitere wiederaufladbare Energiespeichereinheit in Serie zuzuschalten.

Grundsätzlich kann die temporäre Erhöhung der Ladezustandsgrenze auf die weitere Ladezustandsgrenze beispielsweise auch dazu führen, dass entsprechende Beschleunigungsvorgänge bis zu einer höheren Zielgeschwindigkeit ausgeführt werden können, d. h. beispielsweise nicht bis zu einer Zielgeschwindigkeit von 100 km/h, sondern bis zu einer Zielgeschwindigkeit 130 km/h. Mithin kann die Energiespeichereinheit die Beschleunigungsarbeit zeitlich länger leisten.

Selbstverständlich ist zur Durchführung des erfindungsgemäßen Verfahrens wenigstens eine geeignete, insbesondere mit der Energiespeichereinheit und/oder dem Fahrzeuganfahrsystem sowie gegebenenfalls weiteren betroffenen Komponenten des Kraftfahrzeugs, wie z. B. einer Getriebesteuerung oder einer Antischlupfregelung, kommunizierende Steuereinrichtung vorgesehen. Sofern mehrere entsprechende Steuereinrichtungen erforderlich sind, kommunizieren diese selbstverständlich auch untereinander.

In Weiterbildung der Erfindung erfolgt der Ladebetrieb der wenigstens einen Energiespeichereinheit bei aktiviertem Fahrzeuganfahrsystem mit einer im Vergleich zum Ladebetrieb bei deaktiviertem Fahrzeuganfahrsystem erhöhten Laderate. Entsprechend wird es angestrebt, die weitere Ladezustandsgrenze der Energiespeichereinheit möglichst schnell zu erreichen, um die Dauer zwischen Aktivieren des Fahrzeuganfahrsystems und tatsächlichem Beschleunigungsvorgang mit der entsprechend durch die zusätzliche Ladung der Energiespeichereinheit bedingten Leistungssteigerung möglichst kurz zu halten.

Es ist denkbar, dass die zum Laden der wenigstens einen Energiespeichereinheit auf die weitere Ladezustandsgrenze erforderliche Energiemenge durch den als Generator betriebenen wenigstens einen Elektromotor, der über einen kraftfahrzeugseitig vorgesehenen Verbrennungsmotor angetrieben wird, erzeugt wird. Diese Ausführungsform des erfindungsgemäßen Verfahrens betrifft den Betrieb eines Hybridkraftfahrzeugs, welches neben einem konventionellen Verbrennungsmotor, wie etwa einem Otto- oder Dieselmotor, auch wenigstens einen als Teil des Antriebsaggregats des Kraftfahrzeugs dienenden Elektromotor aufweist. Der Ladebetrieb der wenigstens einen Energiespeichereinheit wird bei Aktivieren des Fahrzeuganfahrsystems entsprechend derart durchgeführt, dass der Verbrennungsmotor den Elektromotor zwischenzeitlich bzw. übergangsweise als Generator betreibt, so dass über diesen die Energiespeichereinheit auf die weitere Ladezustandsgrenze geladen wird. Nach Erreichen der weiteren Ladezustandsgrenze und insbesondere bei Durchführen der maximal beschleunigten Anfahrt wird der Elektromotor selbstverständlich wieder als Antriebsmittel für das Kraftfahrzeug verwendet.

Es ist weiter denkbar, dass die zum Laden der wenigstens einen Energiespeichereinheit auf die weitere Ladezustandsgrenze erforderliche Energiemenge durch den als Generator betriebenen wenigstens einen Elektromotor, der über wenigstens einen weiteren kraftfahrzeugseitig vorgesehenen Elektromotor angetrieben wird, erzeugt wird. Diese Ausgestaltung des erfindungsgemäßen Verfahrens ist insbesondere für reine Elektrokraftfahrzeuge anwendbar. Im Gegensatz zu dem vorstehend beschriebenen Prinzip dient hier wenigstens ein zusätzlicher, insbesondere in Serie geschalteter, Elektromotor dem Antrieb des als Generator betriebenen Elektromotors, welcher die zum Laden der wenigstens einen Energiespeichereinheit auf die weitere Ladezustandsgrenze erforderliche Energiemenge bereitstellt. Dem weiteren bzw. zusätzlichen Elektromotor ist bevorzugt wenigstens eine separate Energiespeichereinheit, welche gleichermaßen im Sinne einer Stützbatterie dient, zugeordnet.

Es kann auch sein, dass die zum Laden der wenigstens einen Energiespeichereinheit auf die weitere Ladezustandsgrenze erforderliche Energiemenge durch wenigstens eine zusätzliche Energiespeichereinheit, insbesondere einen Doppelschichtkondensator, bereitgestellt wird. Diese Ausführungsform des erfindungsgemäßen Verfahrens ist gleichermaßen sowohl für Hybridkraftfahrzeuge als auch für reine Elektrokraftfahrzeuge anwendbar. Hierbei wird die zum Laden der wenigstens einen Energiespeichereinheit auf die weitere Ladezustandsgrenze erforderliche Energiemenge über wenigstens eine zusätzliche Energiespeichereinheit, welche gleichermaßen als Stützbatterie oder dergleichen bezeichnet werden kann, bereitgestellt. Die beiden Energiespeichereinheiten sind bevorzugt über einen DC/DC-Wandler (Gleichspannungswandler) verbunden, d. h. bei Erhöhung der Ladezustandsgrenze der eigentlichen Energiespeichereinheit wird die über die zusätzliche Energiespeichereinheit bereitgestellte Energiemenge unter Zwischenschaltung eines DC/DC-Wandlers übertragen.

Doppelschichtkondensatoren, welche gemeinhin auch als sogenannte "super caps" bezeichnet werden, zeichnen sich durch eine besonders hohe Leistungsdichte aus, weshalb diese besonders geeignet sind, die zum Laden der Energiespeichereinheit auf die weitere Ladezustandsgrenze erforderliche Energiemenge bereitzustellen.

Es ist zweckmäßig, wenn die wenigstens eine weitere Energiespeichereinheit in einem Rekuperationsbetrieb geladen wird. Hierbei kann die z. B. beim Bremsen des Kraftfahrzeugs entstehende Energie in elektrische Energie umgewandelt, in einer entsprechend als Zwischenspeicher agierenden Energiespeichereinheit zwischengespeichert und im Weiteren zum Laden der dem Antriebsaggregat zugeordneten Energiespeichereinheit verwendet werden.

Um einem Fahrzeuginsassen einen erlebbaren Eindruck des erfindungsgemäßen Verfahrens zu ermöglichen, ist es denkbar, dass der aktuelle Ladezustand der Energiespeichereinheit während des Ladebetriebs auf die weitere Ladezustandsgrenze visuell und/oder akustisch und/oder haptisch wahrnehmbar gestaltet wird. Hierfür sind kraftfahrzeugseitig selbstverständlich entsprechende Ausgabemittel wie Bildschirme, Lautsprecher, Vibrationsvorrichtungen etc. vorgesehen.

Daneben betrifft die vorliegende Erfindung ein Kraftfahrzeug, insbesondere ein Hybridkraftfahrzeug oder ein rein elektrisches Kraftfahrzeug, umfassend wenigstens einen mit wenigstens einer wiederaufladbaren elektrische Energie speichernden Energiespeichereinheit verbundenen Elektromotor, sowie wenigstens ein Fahrzeuganfahrsystem, welches zur Durchführung einer maximalen Beschleunigung des Kraftfahrzeugs aus dem Stand ausgebildet ist. Das Kraftfahrzeug ist zur Durchführung des erfindungsgemäßen, vorstehend beschriebenen Verfahrens ausgebildet. Entsprechend weist das erfindungsgemäße Kraftfahrzeug bei aktiviertem Fahrzeuganfahrsystem eine durch Laden der wenigstens einen Energiespeichereinheit auf die weitere Ladezustandsgrenze oder durch Zuschalten einer weiteren Energiespeichereinheit in Serie gesteigerte Leistungsmenge und somit bei aktiviertem Fahrzeuganfahrsystem ein gesteigertes Beschleunigungsverhalten auf.

Wie erwähnt, kann das erfindungsgemäße Kraftfahrzeug grundsätzlich sowohl als Hybridkraftfahrzeug, umfassend einen Verbrennungsmotor und wenigstens einen Elektromotor, oder als reines Elektrokraftfahrzeug, umfassend wenigstens einen das Antriebsaggregat des Kraftfahrzeugs bildenden Elektromotor, ausgebildet sein.

Für die Variante eines Hybridkraftfahrzeugs ist es denkbar, dass die zum Laden der wenigstens einen Energiespeichereinheit auf die weitere Ladezustandsgrenze erforderliche Energiemenge durch den über den Verbrennungsmotor angetriebenen, als Generator betriebenen wenigstens einen Elektromotor, erzeugbar ist. In dieser Variante wird der Verbrennungsmotor genutzt, um den Elektromotor zwischenzeitlich bzw. übergangsweise, das heißt zum Ladebetrieb der Energiespeichereinheit auf die weitere Ladezustandsgrenze, als Generator zu betreiben.

Insbesondere für die Variante des reinen Elektrokraftfahrzeugs ist es denkbar, dass die zum Laden der wenigstens einen Energiespeichereinheit auf die weitere Ladezustandsgrenze erforderliche Energiemenge durch den als Generator betriebenen wenigstens einen Elektromotor, der über wenigstens einen weiteren kraftfahrzeugseitig vorgesehenen Elektromotor angetrieben wird, erzeugbar ist. Entsprechend weist das Kraftfahrzeug hier wenigstens einen weiteren, gegebenenfalls in Serie geschalteten, Elektromotor auf, welcher den zwischenzeitlich zum Laden der dem Antriebsaggregat des Kraftfahrzeugs zugeordneten Energiespeichereinheit auf die weitere Ladezustandsgrenze als Generator dienenden Elektromotor antreibt. Mithin weist das erfindungsgemäße Kraftfahrzeug in dieser Ausführungsform wenigstens eine weitere, gegebenenfalls als Stützbatterie zu bezeichnende, Energiespeichereinheit auf, welche den den als Generator dienenden Elektromotor antreibenden, weiteren bzw. zusätzlichen Elektromotor antreibt.

Es ist ferner möglich, dass die zum Laden der wenigstens einen Energiespeichereinheit auf die weitere Ladezustandsgrenze erforderliche Energiemenge durch wenigstens eine zusätzliche Energiespeichereinheit, insbesondere einen Doppelschichtkondensator, bereitstellbar ist. Hierbei wird die für die Leistungssteigerung der Energiespeichereinheit erforderliche Energiemenge über eine weitere als Zwischenspeicher dienende Energiespeichereinheit bereitgestellt. Vorteilhaft umfasst letztere wenigstens einen Doppelschichtkondensator, welcher sich durch eine besonders hohe Leistungsdichte auszeichnet. Die beiden Energiespeichereinheiten sind bevorzugt über einen DC/DC-Wandler (Gleichspannungswandler) verbunden, d. h. bei Erhöhung der Ladezustandsgrenze der eigentlichen Energiespeichereinheit wird die über die zusätzliche Energiespeichereinheit bereitgestellte Energiemenge unter Zwischenschaltung eines DC/DC-Wandlers übertragen.

In Weiterbildung der Erfindung ist es vorgesehen, dass das Kraftfahrzeug wenigstens ein Ausgabemittel aufweist, über welches der aktuelle Ladezustand der Energiespeichereinheit während des Ladebetriebs auf die weitere Ladezustandsgrenze für wenigstens einen Fahrzeuginsassen visuell und/oder akustisch und/oder haptisch wahrnehmbar ist. Das Ausgabemittel kann beispielsweise als Bildschirm mit einer entsprechend grafisch gestalteten, den Ladezustand der Energiespeichereinheit oder die weiteren nach Aktivierung des Fahrzeuganfahrsystems vorgenommenen Maßnahmen zur Leistungssteigerung darstellenden Anzeige ausgebildet sein. Selbstverständlich sind auch Lautsprecher oder etwa lenkrad- oder sitzseitig vorgesehene Vibrationsvorrichtungen unter einem entsprechenden Ausgabemittel zusammenzufassen.

Analog zu dem erfindungsgemäßen Verfahren können die jeweiligen Ladezustandsgrenzen fest vorgegeben oder individuell vorgebbar sein.

Die eigentliche, gegebenenfalls als untere Ladezustandsgrenze zu bezeichnende Ladezustandsgrenze kann ca. 80% des maximalen Ladezustands und die weitere, gegebenenfalls als obere Ladezustandsgrenze zu bezeichnende Ladezustandsgrenze kann ca. 90% des maximalen Ladezustands der wenigstens einen Energiespeichereinheit betragen. Selbstverständlich kann die obere Ladezustandsgrenze auch 100% des maximalen Ladezustands der Energiespeichereinheit betragen. Die Angaben sind lediglich beispielhaft zu verstehen. Wie bereits zum erfindungsgemäßen Verfahren erläutert, sind die jeweiligen Ladezustandsgrenzen grundsätzlich in Abhängigkeit der konkreten Ausgestaltung der Energiespeichereinheit einzustellen.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung eines erfindungsgemäßen Kraftfahrzeugs gemäß einer ersten beispielhaften Ausführungsform;
- Fig. 2: eine Prinzipdarstellung eines erfindungsgemäßen Kraftfahrzeugs gemäß einer zweiten beispielhaften Ausführungsform; und
- Fig. 3: eine Prinzipdarstellung eines erfindungsgemäßen Kraftfahrzeugs gemäß einer dritten beispielhaften Ausführungsform.

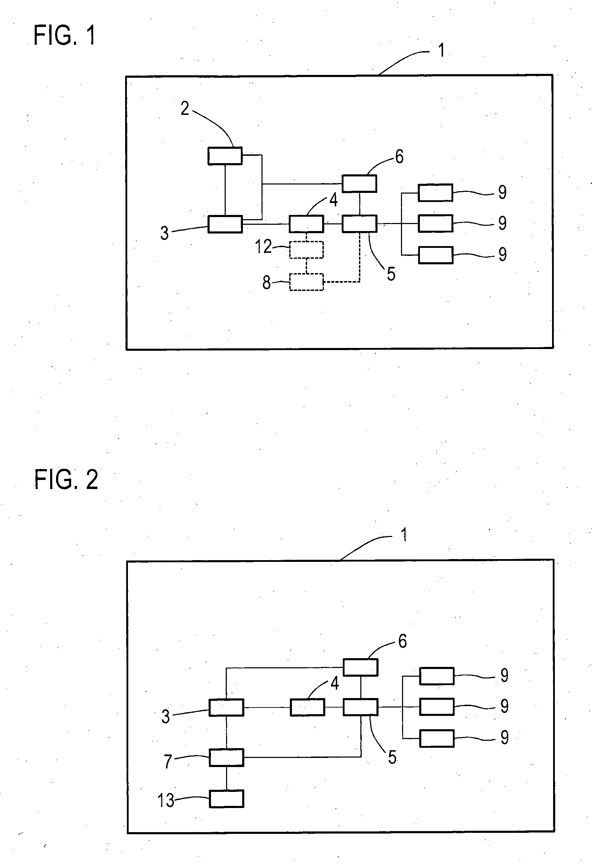

Fig. 1 zeigt eine Prinzipdarstellung eines erfindungsgemäßen Kraftfahrzeugs 1 gemäß einer ersten beispielhaften Ausführungsform. Das Kraftfahrzeug 1 ist ein Hybridkraftfahrzeug und umfasst als Teil des Antriebsstranges sowohl einen Verbrennungsmotor 2 als auch einen Elektromotor 3, welche gemeinsam das Antriebsaggregat des Kraftfahrzeugs 1 bilden. Der Elektromotor 3 ist mit einer wiederaufladbaren, elektrische Energie speichernden Energiespeichereinheit 4 verbunden. Die Energiespeichereinheit 4 kann beispielsweise mehrere miteinander verschaltete Energiespeicherelemente (nicht gezeigt) in Form von auf Lithium basierenden Zellen aufweisen. Eine Steuereinrichtung 5 steuert den Ladebetrieb der Energiespeichereinheit 4 derart, dass eine unterhalb des maximalen Ladezustands der Energiespeichereinheit liegende, im Weiteren als untere Ladezustandsgrenze bezeichnete Ladezustandsgrenze von beispielsweise 80 % des maximalen Ladezustands der Energiespeichereinheit 4 nicht überschritten wird. Derart kann die Lebensdauer der Energiespeichereinheit 4 im Normalbetrieb des Kraftfahrzeugs 1 erhöht werden.

Ferner umfasst das Kraftfahrzeug 1 ein Fahrzeuganfahrsystem 6, welches zur automatischen Durchführung einer maximalen Beschleunigung des Kraftfahrzeugs 1 aus dem Stand ausgebildet ist. Entsprechende Fahrzeuganfahrsysteme 6 werden regelmäßig als "Launch Control" bezeichnet und ermöglichen es bei Aktivieren über ein geeignetes kraftfahrzeugseitig vorgesehenes Bedienelement, wie einen Schalter oder dergleichen, ein, insbesondere mit automatischen Schaltgetriebe ausgestattetes, Kraftfahrzeug 1 optimal, insbesondere auf eine Zielgröße wie etwa die Höchstgeschwindigkeit, zu beschleunigen.

Das erfindungsgemäße Verfahren sieht es vor, dass bei Aktivieren des Fahrzeuganfahrsystems 6 der Ladebetrieb der Energiespeichereinheit 4 vor der Beschleunigung respektive dem Anfahren des Kraftfahrzeugs 1 derart erfolgt, dass die Energiespeichereinheit 4 bis zu einer weiteren, oberhalb der ersten Ladezustandsgrenze der Energiespeichereinheit 4 liegenden, im Weiteren als obere Ladezustandsgrenze bezeichnete, Ladezustandsgrenze von beispielsweise 90 % des maximalen Ladezustands der Energiespeichereinheit 4 geladen wird.

Dabei liegt der vorliegenden Erfindung der Gedanke zugrunde, dass die Energiespeichereinheit 4 bei Laden über die untere Ladezustandsgrenze von 80 % eine deutliche Spannungszunahme und somit der Elektromotor 3 eine deutliche Leistungssteigerung erfährt. Mithin kann durch das Laden der Energiespeichereinheit 4 auf die obere Ladezustandsgrenze der automatische Anfahrvorgang des Kraftfahrzeugs 1 aus dem Stand mittels des Fahrzeuganfahrsystems 6 mit einer im Vergleich höheren Beschleunigung durchgeführt werden. Gleichermaßen ist es auch denkbar, auf höhere Zielgeschwindigkeiten zu beschleunigen, so dass gegebenenfalls anstelle einer Beschleunigung auf eine Zielgeschwindigkeit von 50 km/h auf eine höhere Zielgeschwindigkeit von 70 km/h beschleunigt werden kann. Letztere Variante ist insbesondere bei im Vergleich kleineren Energiespeichereinheiten 4 vorteilhaft.

Insgesamt wird das Potential der Energiespeichereinheit 4 respektive des Elektromotors 3 derart über die gesamte vorzunehmende Beschleunigung des Kraftfahrzeugs 1 aufgrund des erhöhten Spannungsniveaus der Energiespeichereinheit 4 erheblich gesteigert bzw. effizienter ausgenutzt.

Bei Aktivieren des Fahrzeuganfahrsystems 6 wird das Kraftfahrzeug 1 entsprechend konditioniert, um den automatischen Beschleunigungsvorgang mit einer optimalen und größtmöglichen Beschleunigung durchzuführen. Hierbei ist es zweckmäßig, wenn der Ladebetrieb der Energiespeichereinheit 4 bei aktiviertem Fahrzeuganfahrsystem 6 mit einer im Vergleich zum Ladebetrieb bei deaktiviertem bzw. deaktivem Fahrzeuganfahrsystem 6 erhöhten Laderate (Ladegeschwindigkeit) erfolgt. Eine entsprechende Steuerung der Laderate, das heißt insbesondere die Einstellung einer maximalen Laderate, erfolgt beispielsweise ebenfalls über die Steuereinrichtung 5.

Der eigentliche Anfahr- bzw. Beschleunigungsvorgang erfolgt beispielsweise, sobald die Energiespeichereinheit 4 auf die obere Ladezustandsgrenze geladen wurde und eine Benutzerfreigabe über eine entsprechende benutzerseitige Eingabe gegeben wurde, so dass ein kontrolliertes Anfahren des Kraftfahrzeugs 1 sichergestellt wird.

Die zum Laden der Energiespeichereinheit 4 auf die obere Ladezustandsgrenze erforderliche Energiemenge wird in dieser erfindungsgemäßen Ausführungsförm derart erzeugt, dass der Elektromotor 3 zwischenzeitlich bzw. übergangsweise als Generator betrieben und so zum Laden der Energiespeichereinheit 4 auf die obere Ladezustandsgrenze verwendet wird. Hierbei wird der Elektromotor 3 über den Verbrennungsmotor 2 angetrieben. Nach Erreichen der oberen Ladezustandsgrenze der Energiespeichereinheit 4 und bei Durchführung der automatischen Anfahrt durch das Fahrzeuganfahrsystem 6, dient der Elektromotor 3 wieder dem Antrieb des Kraftfahrzeugs 1.

Alternativ zum Betrieb des Elektromotors 3 als Generator kann es ferner sein, dass die zum Laden der Energiespeichereinheit 4 auf die obere Ladezustandsgrenze erforderliche Energiemenge durch eine zusätzliche Energiespeichereinheit 8 (gestrichelte Darstellung) in Form eines Doppelschichtkondensators bereitgestellt wird. Die Energiespeichereinheit 8 in Form des Doppelschichtkondensators wird bevorzugt im Rekuperationsbetrieb des Kraftfahrzeugs 1 geladen, das heißt, die etwa beim Bremsen des Kraftfahrzeugs 1 entstehende Energie wird in elektrische Energie umgewandelt und der weiteren Energiespeichereinheit 8 im Sinne eines Zwischenspeichers zugeführt. Zwischen die Energiespeichereinheit 4 und die zusätzliche Energiespeichereinheit 8 ist bevorzugt ein DC/DC-Wandler 12 geschaltet. Über die Verwendung einer als Doppelschichtkondensator ausgebildeten Energiespeichereinheit 8 lässt sich besonders schnell eine entsprechende Erhöhung des Spannungsniveaus der Energiespeichereinheit 4 realisieren.

Das Kraftfahrzeug 1 weist ferner entsprechende Ausgabemittel 9 auf, über welche insbesondere der Ladezustand respektive der Ladevorgang der Energiespeichereinheit 4 auf die obere Ladezustandsgrenze ausgebbar ist. Die Ausgabemittel 9 können beispielsweise als Bildschirm, Lautsprecher oder z. B. mit einem kraftfahrzeugseitig vorgesehenen Lenkrad gekoppelte Vibrationsvorrichtung ausgebildet sein.

Grundsätzlich können die untere und/oder obere Ladezustandsgrenze etwa werksseitig vorgegeben oder etwa von einem Benutzer individuell vorgebbar sein.

Fig. 2 zeigt eine Prinzipdarstellung eines erfindungsgemäßen Kraftfahrzeugs 1 gemäß einer zweiten beispielhaften Ausführungsform. Es handelt sich hierbei im Gegensatz zu der in Fig. 1 gezeigten Ausführungsform um ein reines Elektrokraftfahrzeug.

Zum Laden der Energiespeichereinheit 4 auf die obere Ladezustandsgrenze kann vorgesehen sein, dass die zum Laden der Energiespeichereinheit 4 auf die obere Ladezustandsgrenze erforderliche Energiemenge durch den als Generator betriebenen Elektromotor 3 erzeugt wird. Der zum Betrieb des Elektromotors 3 als Generator erforderliche Energiebedarf wird über wenigstens einen weiteren kraftfahrzeugseitig vorgesehenen Elektromotor 7 bereitgestellt wird. Mithin wird der als Generator betriebene Elektromotor 3 von dem weiteren Elektromotor 7 angetrieben. Dem Elektromotor 7 ist eine separate Energiespeichereinheit 13 zugeordnet, welche gleichermaßen bevorzugt über einen Rekuperationsbetrieb geladen wird.

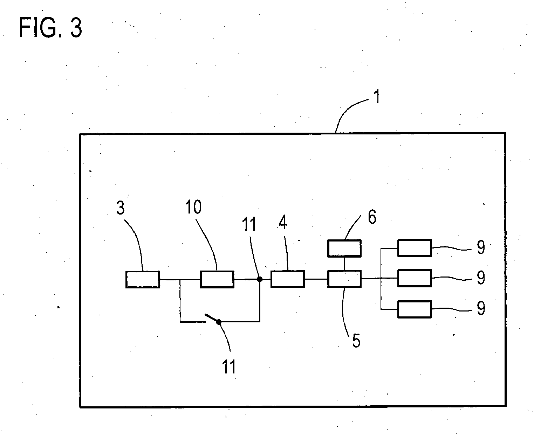

Fig. 3 zeigt eine Prinzipdarstellung eines erfindungsgemäßen Kraftfahrzeugs 1 gemäß einer dritten beispielhaften Ausführungsform. Wenngleich die Ausführungsform gemäß Fig. 3 analog zu Fig. 2 eine Ausbildung des erfindungsgemäßen Kraftfahrzeugs als reines Elektrokraftfahrzeug zeigt, ist es ebenso denkbar, das in Fig. 3 gezeigte Prinzip auf ein etwa in Fig. 1 gezeigtes Hybridkraftfahrzeug zu übertragen.

Der wesentliche Unterschied zu den in den Figuren 1, 2 gezeigten Ausführungsformen besteht darin, dass bei Aktivieren des Fahrzeuganfahrsystems 6 über die Steuereinrichtung 5 eine weitere Energiespeichereinheit 10 in Serie zu der Energiespeichereinheit 3 zugeschaltet wird. Mithin wird hier die Spannungszunahme respektive Leistungssteigerung durch eine während der automatischen Beschleunigung zwischenzeitliche Serienschaltung der Energiespeichereinheiten 3, 10 realisiert. Die gleichermaßen als Stützbatterie zu bezeichnende Energiespeichereinheit 10, welche ebenso bevorzugt im Rekuperationsbetrieb des Kraftfahrzeugs 1 geladen wird, wird also bedarfsmäßig, das heißt bei Aktivieren des Fahrzeuganfahrsystems 6 zugeschaltet. Selbstverständlich sind die Energiespeichereinheiten 3, 10 derart aufeinander angepasst, dass sich insgesamt eine Leistungszunahme und somit eine verbesserte maximale Beschleunigung des Kraftfahrzeugs 1 aus dem Stand ergibt. Die Zuschaltung der Energiespeichereinheit 10 erfolgt über eine entsprechende Ansteuerung der hierfür vorgesehenen Schaltmittel 11 insbesondere über die Steuereinrichtung 5 oder eine weitere Steuereinrichtung (nicht gezeigt).

## Patentansprüche

1. Verfahren zum Betrieb eines Kraftfahrzeugs (1), umfassend wenigstens einen mit wenigstens einer wiederaufladbaren, elektrische Energie speichernden Energiespeichereinheit (4) verbundenen Elektromotor (3), wobei der Ladebetrieb der Energiespeichereinheit (4) derart erfolgt, dass eine unterhalb des maximalen Ladezustands der Energiespeichereinheit (4) liegende Ladezustandsgrenze nicht überschritten wird, wobei
bei Aktivieren wenigstens eines Fahrzeuganfahrsystems (6), welches zur automatischen Durchführung einer maximalen Beschleunigung des Kraftfahrzeugs (1) aus dem Stand ausgebildet ist, der Ladebetrieb der Energiespeichereinheit (4) vor der Beschleunigung des Kraftfahrzeugs (1) derart erfolgt, dass die Energiespeichereinheit (4) bis zu einer weiteren, oberhalb der ersten Ladezustandsgrenze liegenden Ladezustandsgrenze geladen wird, **dadurch gekennzeichnet, dass** die zum Laden der wenigstens einen Energiespeichereinheit (4) auf die weitere Ladezustandsgrenze erforderliche Energiemenge durch den als Generator betriebenen wenigstens einen Elektromotor (3), der über wenigstens einen weiteren kraftfahrzeugseitig vorgesehenen Elektromotor (7) angetrieben wird, erzeugt wird und/oder durch wenigstens eine zusätzliche Energiespeichereinheit (8), insbesondere einen Doppelschichtkondensator, bereitgestellt wird, und/oder wobei wenigstens eine weitere wiederaufladbare Energiespeichereinheit (10) in Serie zugeschaltet wird.

2. Verfahren nach Anspruch 1,
**dadurch gekennzeichnet,**
**dass** der Ladebetrieb der wenigstens einen Energiespeichereinheit (4) bei aktiviertem Fahrzeuganfahrsystem (6) mit einer im Vergleich zum Ladebetrieb bei deaktiviertem Fahrzeuganfahrsystem (6) erhöhten Laderate erfolgt.

3. Verfahren nach Anspruch 1 oder 2,
**dadurch gekennzeichnet,**
**dass** die zum Laden der wenigstens einen Energiespeichereinheit (4) auf die weitere Ladezustandsgrenze erforderliche Energiemenge durch den als Generator betriebenen wenigstens einen Elektromotor (3), der über einen kraftfahrzeugseitig vorgesehenen Verbrennungsmotor (2) angetrieben wird, erzeugt wird.

4. Verfahren nach Anspruch einem der vorangehenden Ansprüche,
**dadurch gekennzeichnet,**
**dass** die wenigstens eine weitere Energiespeichereinheit (4) in einem Rekuperationsbetrieb geladen wird.

5. Verfahren nach einem der vorangehenden Ansprüche,
**dadurch gekennzeichnet,**
**dass** der aktuelle Ladezustand der Energiespeichereinheit (4) während des Ladebetriebs auf die weitere Ladezustandsgrenze für wenigstens einen Fahrzeuginsassen visuell und/oder akustisch und/oder haptisch wahrnehmbar gestaltet wird.

6. Verfahren nach einem der vorangehenden Ansprüche,
**dadurch gekennzeichnet,**
**dass** als Ladezustandsgrenze und/oder weitere Ladezustandsgrenze eine fest vorgegeben oder individuell vorgebbare Ladezustandsgrenze verwendet wird.

7. Verfahren nach einem der vorangehenden Ansprüche,
**dadurch gekennzeichnet,**
**dass** als erste Ladezustandsgrenze 80% des maximalen Ladezustands und als weitere Ladezustandsgrenze 90% des maximalen Ladezustands der wenigstens einen Energiespeichereinheit (4) verwendet wird.

8. Kraftfahrzeug (1), insbesondere elektrisches Kraftfahrzeug oder HybridKraftfahrzeug, umfassend wenigstens einen mit wenigstens einer wiederaufladbaren elektrische Energie speichernden Energiespeichereinheit (4) verbundenen Elektromotor (3), sowie wenigstens ein Fahrzeuganfahrsystem (6), welches zur Durchführung einer maximalen Beschleunigung des Kraftfahrzeugs (1) aus dem Stand ausgebildet ist,
**dadurch gekennzeichnet, dass**
es zur Durchführung des Verfahrens nach einem der vorangehenden Ansprüche ausgebildet ist.

9. Kraftfahrzeug nach Anspruch 8,
**dadurch gekennzeichnet,**
**dass** es als Hybridfahrzeug, umfassend einen Verbrennungsmotor (2) und den wenigstens einen Elektromotor (3), ausgebildet ist, wobei die zum Laden der wenigstens einen Energiespeichereinheit (4) auf die weitere Ladezustandsgrenze erforderliche Energiemenge durch den über den Verbrennungsmotor (2) angetriebenen, als Generator betriebenen wenigstens einen Elektromotor (3), erzeugbar ist.

10. Kraftfahrzeug nach Anspruch 8 oder 9,
**dadurch gekennzeichnet,**
**dass** es als Hybridfahrzeug, umfassend einen Verbrennungsmotor (2) und den wenigstens einen Elektromotor (3), ausgebildet ist, wobei die zum Laden der wenigstens einen Energiespeichereinheit (4) auf die weitere Ladezustandsgrenze erforderliche Energiemenge durch den über wenigstens einen weiteren kraftfahrzeugseitig vorgesehenen Elektromotor (7) angetriebenen, als Generator betriebenen wenigstens einen Elektromotor (3) erzeugbar ist.

11. Kraftfahrzeug nach Anspruch 8,
**dadurch gekennzeichnet,**
**dass** es als Elektrofahrzeug ausgebildet ist, wobei die zum Laden der wenigstens einen Energiespeichereinheit (4) auf die weitere Ladezustandsgrenze erforderliche Energiemenge durch den über wenigstens einen weiteren kraftfahrzeugseitig vorgesehenen Elektromotor (7) angetriebenen, als Generator betriebenen wenigstens einen Elektromotor (3) erzeugbar ist.

12. Kraftfahrzeug nach Anspruch 8 oder 11,
**dadurch gekennzeichnet,**
**dass** es als Elektrofahrzeug ausgebildet ist, wobei die zum Laden der wenigstens einen Energiespeichereinheit (4) auf die weitere Ladezustandsgrenze erforderliche Energiemenge durch wenigstens eine zusätzliche Energiespeichereinheit (8), insbesondere einen Doppelschichtkondensator, bereitstellbar ist.

13. Kraftfahrzeug nach einem der Ansprüche 8 bis 12,
**dadurch gekennzeichnet,**
**dass** es wenigstens ein Ausgabemittel (9) aufweist, über welches der aktuelle Ladezustand der Energiespeichereinheit (4) während des Ladebetriebs auf die weitere Ladezustandsgrenze für wenigstens einen Fahrzeuginsassen visuell und/oder akustisch und/oder haptisch wahrnehmbar ist.

14. Kraftfahrzeug nach einem der Ansprüche 8 bis 13,
**dadurch gekennzeichnet,**
**dass** die und/oder die weitere Ladezustandsgrenze fest vorgegeben oder individuell vorgebbar ist.

15. Kraftfahrzeug nach einem der Ansprüche 8 bis 14,
**dadurch gekennzeichnet,**
**dass** die eine Ladezustandsgrenze 80% des maximalen Ladezustands und die weitere Ladezustandsgrenze 90% des maximalen Ladezustands der wenigstens einen Energiespeichereinheit (4) ist.

## Claims

1. Method for operating a motor vehicle (1) comprising at least one electric motor (3) which is connected to at least one rechargeable electrical energy storage unit (4) for storing electrical energy, wherein the charging operation of the energy storage unit (4) takes place such that a charge-state limit which lies below the maximum charge state of the energy storage unit (4) is not exceeded, wherein,
upon activation of at least one vehicle drive system (6), which is designed to automatically perform maximum acceleration of the motor vehicle (1) from standstill, the charging operation of the energy storage unit (4) before the acceleration of the motor vehicle (1) takes place in such a way that the energy storage unit (4) is charged to a further charge-state limit which lies above the first charge-state limit,
**characterised in that** the amount of energy required to charge the at least one energy storage unit (4) to the further charge-state limit is produced by the at least one electric motor (3) which is operated as a generator and is driven by at least one additional electric motor (7) provided on the vehicle side, and/or is provided by at least one additional energy storage unit (8), in particular a double layer capacitor, and/or wherein at least one additional rechargeable energy storage unit (10) is connected in series.

2. Method according to claim 1,
**characterised in that**,
the charging operation of the at least one energy storage unit (4), in the case of an activated vehicle drive system (6), takes place at an increased charging rate compared with the charging operation in the case of a deactivated vehicle drive system (6).

3. Method according to either claim 1 or claim 2,
**characterised in that**
the amount of energy required to charge the at least one energy storage unit (4) to the further charge-state limit is produced by the at least one electric motor (3) which is operated as a generator and is driven by an internal combustion engine (2) provided on the vehicle side.

4. Method according to any of the preceding claims,
**characterised in that**
the at least one additional energy storage unit (4) is charged in a recuperation operation.

5. Method according to any of the preceding claims,
**characterised in that**
the current charge state of the energy storage unit (4) during the charging operation to the further charge-state limit is designed to be visually and/or acoustically and/or haptically perceptible to at least one vehicle occupant.

6. Method according to any of the preceding claims,
**characterised in that**
a fixed or individually pre-determinable charge-state limit is used as a charge-state limit and/or further charge-state limit.

7. Method according to any of the preceding claims,
**characterised in that**
80 % of the maximum charge state is used as the first charge-state limit and 90 % of the maximum charge state is used as the further charge-state limit of the at least one energy storage unit (4).

8. Motor vehicle (1), in particular an electric vehicle or hybrid vehicle, comprising at least one electric motor (3) which is connected to at least one rechargeable energy storage unit (4) which stores electrical energy, as well as at least one vehicle drive system (6) which is designed to carry out maximum acceleration of the motor vehicle (1) from standstill,
**characterised in that**
it is designed to carry out the method according to any of the preceding claims.

9. Motor vehicle according to claim 8,
**characterised in that**
it is in the form of a hybrid vehicle comprising an internal combustion engine (2) and the at least one electric motor (3), wherein the amount of energy required to charge the at least one energy storage unit (4) to the further charge-state limit can be produced by the at least one electric motor (3) which is operated as a generator and is driven by the internal combustion engine (2).

10. Motor vehicle according to either claim 8 or claim 9,
**characterised in that**
it is in the form of a hybrid vehicle comprising an internal combustion engine (2) and the at least one electric motor (3), wherein the amount of energy required to charge the at least one energy storage unit (4) to the further charge-state limit can be produced by the at least one electric motor (3), which is operated as a generator and is driven by at least one additional electric motor (7) provided on the vehicle side.

11. Motor vehicle according to claim 8,
**characterised in that**
it is in the form of an electric vehicle, wherein the amount of energy required to charge the at least one energy storage unit (4) to the further charge-state limit can be produced by the at least one electric motor (3) which is operated as a generator and is driven by at least one additional electric motor (7) provided on the vehicle side.

12. Motor vehicle according to either claim 8 or claim 11,
**characterised in that**
it is in the form of an electric vehicle, wherein the amount of energy required to charge the at least one energy storage unit (4) to the further charge-state limit can be provided by at least one additional energy storage unit (8), in particular a double layer capacitor.

13. Motor vehicle according to any of claims 8 to 12,
**characterised in that**
it has at least one output means (9) via which the current charge state of the energy storage unit (4) during the charging operation to the further charge-state limit is designed to be visually and/or acoustically and/or haptically perceptible to at least one vehicle occupant.

14. Motor vehicle according to any of claims 8 to 13,
**characterised in that**
the charge-state limit and/or the further charge-state limit is fixed or individually pre-determinable.

15. Motor vehicle according to any of claims 8 to 14,
**characterised in that**
the charge-state limit is 80 % of the maximum charge-state limit and the further charge-state limit is 90 % of the maximum charge state of at the least one energy storage unit (4).

## Revendications

1. Procédé de fonctionnement d'un véhicule automobile (1), comprenant au moins un moteur électrique (3) connecté à au moins une unité d'accumulation d'énergie rechargeable (4) accumulant de l'énergie, dans lequel le chargement de l'unité d'accumulation d'énergie (4) se fait de manière à ne pas dépasser une limite d'état de charge se trouvant en dessous de l'état de charge maximale de l'unité d'accumulation d'énergie (4), dans lequel,
lors de l'activation au moins d'un système de démarrage de véhicule (6), qui est conçu pour assurer automatiquement une accélération maximale du véhicule automobile (1) à l'état arrêté, le chargement de l'unité d'accumulation d'énergie (4) se fait avant l'accélération du véhicule automobile (1) en sorte que l'unité d'accumulation d'énergie (4) soit chargée à une autre limite de l'état de charge se trouvant au-dessus de la première limite de l'état de charge, **caractérisé en ce que** la quantité d'énergie nécessaire au chargement de la au moins une unité d'accumulation d'énergie à l'autre limite d'état de charge est produite par le au moins un moteur électrique (3) exploité comme générateur, qui est entraîné via au moins un autre moteur électrique (7) prévu côté véhicule automobile, et/ou est fournie par au moins une unité d'accumulation d'énergie supplémentaire (8), en particulier un condensateur à couche double, et/ou dans lequel au moins une autre unité d'accumulation d'énergie rechargeable (10) est connectée en série.

2. Procédé selon la revendication 1,
**caractérisé en ce que** :
le chargement de la au moins une unité d'accumulation d'énergie (4) lorsque le système de démarrage de véhicule (6) est activé se fait à taux de chargement élevé en comparaison du chargement lorsque le système de démarrage de véhicule (6) est désactivé.

3. Procédé selon la revendication 1 ou la revendication 2,
**caractérisé en ce que** :
la quantité d'énergie nécessaire au chargement de la au moins une unité d'accumulation d'énergie (4) à l'autre limite d'état de charge est produite par le au moins un moteur électrique (3) exploité comme générateur, qui est entraîné via un moteur à combustion (2) prévu côté véhicule automobile.

4. Procédé selon l'une quelconque des revendications précédentes,
**caractérisé en ce que** :
la au moins une autre unité d'accumulation d'énergie (4) est chargée dans une opération de récupération.

5. Procédé selon l'une quelconque des revendications précédentes,
**caractérisé en ce que** :
l'état de charge courant de l'unité d'accumulation d'énergie (4) est élaboré au cours du chargement à l'autre limite d'état de charge pour au moins un occupant du véhicule dans le cadre d'un avertissement visuel et/ou optique et/ou haptique.

6. Procédé selon l'une quelconque des revendications précédentes,
**caractérisé en ce que** :
l'on utilise comme limite d'état de charge et/ou comme autre limite d'état de charge une limite d'état de charge préétablie fixe ou pré-établissable individuellement.

7. Procédé selon l'une quelconque des revendications précédentes,
**caractérisé en ce que** :
l'on utilise comme première limite d'état de charge 80 % de l'état de charge maximale et comme autre limite d'état de charge 90 % de l'état de charge maximale de la au moins une unité d'accumulation d'énergie (4).

8. Véhicule automobile (1), en particulier véhicule automobile électrique ou véhicule automobile hybride, comprenant au moins un moteur électrique (3) connecté à au moins une unité d'accumulation d'énergie rechargeable (4) accumulant de l'énergie ainsi qu'au moins un système de démarrage du véhicule (6), qui est conçu pour assurer une accélération maximale du véhicule automobile (1) à l'état arrêté,
**caractérisé en ce que** :
il est conçu pour réaliser le procédé selon l'une quelconque des revendications précédentes.

9. Véhicule automobile selon la revendication 8,
**caractérisé en ce que** :
il est conçu comme véhicule hybride comprenant un moteur de combustion (2) et le au moins un moteur électrique (3), dans lequel la quantité d'énergie nécessaire au chargement de la au moins une unité d'accumulation d'énergie (4) à l'autre limite d'état de charge peut être produite par le au moins un moteur électrique (3) entraîné via le moteur de combustion (2) et exploité comme générateur.

10. Véhicule automobile selon la revendication 8 ou la revendication 9,
**caractérisé en ce que** :
il est conçu comme véhicule hybride comprenant un moteur de combustion (2) et le au moins un moteur électrique (3), dans lequel la quantité d'énergie nécessaire au chargement de la au moins une unité d'accumulation d'énergie (4) à l'autre limite d'état de charge peut être produite par le au moins un moteur électrique (3) entraîné via au moins un autre moteur électrique (7) prévu côté véhicule automobile et exploité comme générateur.

11. Véhicule automobile selon la revendication 8,
**caractérisé en ce que** :
il est conçu comme véhicule électrique dans lequel la quantité d'énergie nécessaire au chargement de la au moins une unité d'accumulation d'énergie (4) à l'autre limite d'état de charge peut être produite par le au moins un moteur électrique (3) entraîné via au moins un autre moteur électrique (7) prévu côté véhicule automobile et exploité comme générateur.

12. Véhicule automobile selon la revendication 8 ou la revendication 11,
**caractérisé en ce que** :
il est conçu comme véhicule électrique dans lequel la quantité d'énergie nécessaire au chargement de la au moins une unité d'accumulation d'énergie (4) à l'autre limite d'état de charge peut être élaborée par au moins une unité d'accumulation d'énergie supplémentaire (8), en particulier un condensateur à double couche.

13. Véhicule automobile selon l'une quelconque des revendications 8 à 12,
**caractérisé en ce que** :
il présente au moins un moyen de sortie (9) par lequel l'état de charge courant de l'unité d'accumulation d'énergie (4) peut être observé au cours du chargement à l'autre limite d'état de charge pour au moins un occupant du véhicule par voie visuelle et/ou optique et/ou haptique.

14. Véhicule automobile selon l'une quelconque des revendications 8 à 13,
**caractérisé en ce que** :
la ou les autres limites d'état de charge est ou sont prédéfinies de manière fixe ou peut ou peuvent être prédéfinies individuellement.

15. Véhicule automobile selon l'une quelconque des revendications 8 à 14,
**caractérisé en ce que** :
la première limite d'état de charge constitue 80 % de l'état de charge maximale et l'autre limite d'état de charge constitue 90 % de l'état de charge maximale de la au moins une unité d'accumulation d'énergie (4).
